# EUROPÄISCHE PATENTSCHRIFT

(11) **EP 0 489 233 B1**
(45) Veröffentlichungstag und Bekanntmachung des Hinweises auf die Patenterteilung: **02.08.1995**
(21) Anmeldenummer: 91115612.3
(22) Anmeldetag: 14.09.1991
(51) Int. Cl.: B60B 35/00, B60G 17/02, F16C 23/10

(54) **Radaufhängung für ein Kraftfahrzeug mit einer Radlagerung**
Wheel suspension with bearing for a motor vehicle
Suspension de roue à logement de roulement pour véhicule automobile

(30) Priorität: 06.12.1990 DE 4038917
(43) Veröffentlichungstag der Anmeldung: 10.06.1992
(73) Patentinhaber: Dr.Ing.h.c. F. Porsche Aktiengesellschaft, 70435 Stuttgart (DE)
(72) Erfinder: Schaible, Walter, Dipl.-Ing. FH, W-7251 Hemmingen (DE)

(56) Entgegenhaltungen:
- CH-A- 191 713
- DE-A- 1 931 065
- DE-C- 807 489
- US-A- 3 334 911

## Beschreibung

Die Erfindung bezieht sich auf eine Radaufhängung nach dem Oberbegriff des Anspruchs 1.

Aus der DE-A-28 55 579 ist ein Lager zum Einstellen von Wellen bekannt, das einen Lageraußenring mit einer exzentrischen, konischen Bohrung aufweist, in die ein Lagerinnenring eingesetzt ist. Eine derartige Anordnung ist zum Ausrichten der Welle gegenüber dem Lager vorgesehen.

Aus der US-A-3,334,911 ist ein einstellbares Rad für ein Fahrzeug bekannt, das ein exzentrisches Lagerelement umfaßt. Dies ist zur Radachse in der Höhe derart einstellbar, daß das Fahrzeug zur Radaufstandsfläche verschiedene Höhen einnehmen kann.

Der im Anspruch 1 angegebenen Erfindung liegt das Problem zugrunde, ein wahlweises Tiefer- und/oder Höherlegen eines Fahrzeugs zu vereinfachen.

Die mit der Erfindung erzielten Vorteile bestehen darin, daß durch einen exzentrisch ausgebildeten Lageraußenring die Lage des Rades zum Radträger so verändert werden kann, daß das Rad in einfacher Weise höher und tieferlegbar ist. Diese Anordnungen des Rades erfolgen durch ein Verdrehen des Lageraußenringes gegenüber dem Radträger. Zusätzliche Befestigungen und Bauelemente sind hierzu nicht erforderlich.

Vorteilhafte Ausgestaltungen der Erfindung sind in den Unteransprüchen angegeben. So weist der Lageraußenring einen entsprechenden Sitz zur formschlüssigen Aufnahme des Radträgers auf und der Lageraußenring kann in verschiedenen Positionen über entsprechend angeordnete korrespondierende Befestigungsbohrungen zum Radträger und zum Lageraußenring festgesetzt werden. Die Teilung der Befestigungsbohrungen kann so gestaltet sein, daß diese mit einem kleinen Abstand auf einer Kreislinie angeordnet sind und z.B. unter einem Winkel von z.B. 20° zueinander stehen oder wie gezeigt unter einem Winkel von etwa 90° zueinander stehen.

Durch diese Ausbildung des Lagers ist es möglich, in einfacher Weise ein Tieferlegen bzw. ein Höhersetzen des Fahrzeugs ohne aufwendige Verbindungsmitteln zu erreichen. Dieses Tiefer- und Höherlegen erfolgt in einfacher Weise durch ein Verdrehen bzw. Umsetzen des Lageraußenringes.

Ein Ausführungsbeispiel der Erfindung ist in der Zeichnung dargestellt und wird im folgenden näher beschrieben.

Es zeigen:

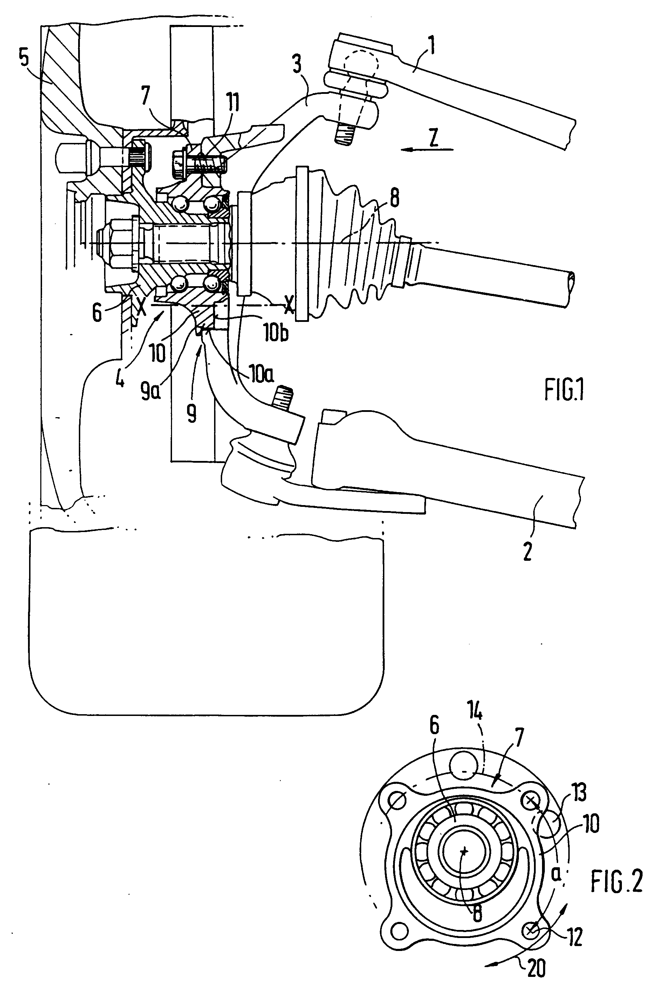

- Fig. 1: eine Vorderansicht durch ein Lagerelement im Rad und
- Fig. 2: eine Ansicht in Pfeilrichtung Z der Fig. 1 mit verdrehtem Außenring.

Eine Radaufhängung für ein Kraftfahrzeug umfaßt im wesentlichen einen über Radlenker 1 und 2 abgestützten Radträger 3, der auf einem Lager 4 gehalten ist. Dieses Lager 4 umfaßt einen mit einem Rad 5 verbundenen Lagerinnenring 6 sowie ein über Kugeln abgestützten Lageraußenring 7. Dieser weist einen exzentrisch zur Raddrehachse 8 angeordneten Sitz 9 für den Radträger 3 auf. Der Sitz 9 besteht aus einem aus der Umfangsebene X-X des Außenringes 7 vorragenden ringförmigen Flansch 10, der den Radträger 3 über eine winkelförmige Eindrehung 9a formschlüssig hält.

Der Radträger 3 ist am Lageraußenring 7 über Schrauben 11 befestigt, die korrespondierende Bohrungen 12, 13 im Lageraußenring 7 und im Radträger 3 durchdringen.

Zum Verstellen des Rades 5 in der Höhe wird der Lageraußenring 7 verdreht z.B. um einen Winkel von ca. 90°, wodurch sich die Höhenlage des Rades 5 zum Radträger 3 ändert. Die Teilung der Bohrungen 12 bzw. 13 ist so gewählt, daß verschiedene Höhenpositionen des Rades 5 möglich sind. Ein Festsetzen des Lageraußenringes 7 am Radträger 3 erfolgt über die Befestigungsschrauben 11. Insbesondere weisen die Befestigungsbohrungen 12 und 13 auf einem Kreis 14 einen gleichen Abstand a zueinander auf, so daß durch Drehung bzw. Umsetzen in Pfeilrichtungen 20 immer Bohrungen 13 des Radträgers 3 den Bohrungen 12 des Lageraußenringes 7 gegenüberstehen.

Der Radträger 3 weist die dem Sitz 9 zugerichtete winkelförmige Eindrehung 9a auf, in die formschlüssig der ringförmige Flansch 10 eingreift. Dieser ist mit seiner Umfangsfläche 10a sowie mit seiner Stirnfläche 10b anliegend zu den gegenüberstehenden Flächen der Eindrehung 9a angeordnet, so daß der Radträger 3 abgestützt und unverrückbar am Lageraußenring 7 gehalten ist.

## Patentansprüche

1. Radaufhängung für ein Kraftfahrzeug mit einer Lagerung für die Räder von Kraftfahrzeugen über eine Nabe, die einen Lagerinnenring (6) umfasst, der von einem Lageraußenring (7) umgeben ist, wobei der Lageraußenring (7) mit dem über Radlenker (1, 2) abgestützten Radträger (3) verbunden ist, **dadurch gekennzeichnet**, daß der Lageraußenring (7) einen zur Raddrehachse (8) exzentrisch angeordneten Sitz (9) für den Radträger (3) umfasst und der Lageraußenring (7) gegenüber dem Radträger (3) in wenigstens zwei Positionen verdrehbar am Radträger (3) über Schrauben (11) festsetzbar ist.

2. Radaufhängung nach Anspruch 1, dadurch gekennzeichnet, daß der Lageraußenring (7) einen aus der Umfangsebene (X-X) vorragenden ringförmigen Flansch (10) umfaßt, der exzentrisch ausgeführt ist und einen Sitz (9) für den Radträger (3) bildet.

3. Radaufhängung nach einem oder mehreren der vorhergehenden Ansprüche, dadurch gekennzeichnet, daß im Radträger (3) gleichmäßig über einen Umfangskreis (14) verteilt Befestigungslöcher (13) angeordnet sind, die einen gleichen Abstand (a) zueinander aufweisen.

4. Radaufhängung nach den Ansprüchen 1, 2 oder 3, dadurch gekennzeichnet, daß im Flansch (10) Befestigungslöcher (12) angeordnet sind, die der Teilung der Löcher (11) im Radträger (3) entsprechen und jeweils eine Position des Lageraußenringes (7) zum Radträger (3) durch Umsetzen dieses Ringes in Pfeilrichtungen (20) einstellbar ist und die Positionen durch die Befestigungsbohrungen (12 bzw. 13) bestimmt sind.

5. Radaufhängung nach einem oder mehreren der vorhergehenden Ansprüche, dadurch gekennzeichnet, daß der Radträger (3) eine winkelförmige Eindrehung (9a) aufweist, in die formschlüssig der ringförmige Flansch (10) eingreift und mit seiner Umfangsfläche (10a) sowie seiner Stirnfläche (10b) anliegend zu den gegenüberliegenden Flächen der Eindrehung (9a) angeordnet sind.

## Claims

1. A wheel suspension for a motor vehicle having a mounting for the wheels of motor vehicles by way of a hub comprising an inner bearing race (6) surrounded by an outer bearing race (7), wherein the outer bearing race (7) is connected to the wheel support (3) supported by way of wheel support arms (1, 2), **characterized in that** the outer bearing race (7) comprises a seat (9) - arranged eccentrically to the rotational axis (8) of the wheel - for the wheel support (3), and the outer bearing race (7) is attachable to the wheel support (3) by way of bolts (11) and rotatable into at least two positions with respect to the wheel support (3).

2. A wheel suspension according to Claim 1, **characterized in that** the outer bearing race (7) comprises an eccentric annular flange (10) projecting from the plane (**X-X**) of the periphery and forming a seat (9) for the wheel support (3).

3. A wheel suspension according to one or more of the preceding Claims, **characterized in that** attachment holes (13) are arranged in the wheel support (3) at an equal distance (**a**) from one another and distributed uniformly over a peripheral circle (14).

4. A wheel suspension according to Claim 1, 2 or 3, **characterized in that** attachment holes (12) corresponding to the distribution of the holes (11) in the wheel support (3) are arranged in the flange (10), and a respective position of the outer bearing race (7) is adjustable with respect to the wheel support (3) by turning the said race in the directions of the arrow (20) and the positions are determined by the attachment bores (12 and 13 respectively).

5. A wheel suspension according to one or more of the preceding Claims, **characterized in that** the wheel support (3) has an angular indentation (9a) into which the annular flange (10) engages with positive locking and [is] arranged with the peripheral face (10a) and the front face (10b) thereof resting against the opposite faces of the indentation (9a).

## Revendications

1. Suspension de roue pour un véhicule automobile avec un montage de roulement pour les roues de véhicule automobile, par l'intermédiaire d'un moyeu, comprenant une bague intérieure de palier (6) qui est entourée par une bague extérieure de palier (7), la bague extérieure de palier (7) étant reliée au support de roue (3) soutenu par des bras articulés de roue (1, 2), caractérisée en ce que la bague extérieure de palier (7) comprend un siège (9), disposé excentré par rapport à l'axe de rotation de roue (8) et destiné au support de roue (3), et la bague extérieure de palier (7) pouvant être fixée, par l'intermédiaire de vis, vis-à-vis du support de roue (3), en au moins deux positions, en pouvant tourner sur le support de roue (3).

2. Suspension de roue selon la revendication 1, caractérisée en ce que la bague extérieure de palier (7) comprend une bride (10) annulaire faisant saillie hors du plan périphérique X-X, réalisée excentrée et constituant un siège (9) pour le support de roue (3).

3. Support de roue selon l'une ou plusieurs des revendications précédentes caractérisé en ce que, dans le support de roue (3) sont disposés des trous de fixation (13), répartis régulièrement sur un cercle périphérique (14) et présentant un espacement (a) régulier les uns par rapport aux autres.

4. Suspension de roue selon la revendication 1, 2 ou 3, caractérisée en ce que dans la bride (10) sont disposés des trous de fixation (12) qui correspondent à la répartition des trous (13) dans le support de roue (3), la position de la bague extérieure de palier (7) par rapport au support de roue (3) étant réglable par décalage de cet anneau dans les sens des flèches (20) et les positions étant déterminées par les trous de fixation (12 ou 13).

5. Suspension de roue selon l'une ou plusieurs des revendications précédentes, caractérisé en ce que le support de roue (3) présente une dépouille de tournage (9a) de forme angulaire, dans lequel la bride annulaire (10) s'engage avec ajustement de forme et est disposée en appui, par sa surface périphérique (10a) ainsi que sa face frontale (10b), sur les faces leur étant opposées de la dépouille de tournage (9a).
